# EUROPÄISCHE PATENTANMELDUNG

(11) **EP 2 987 619 A1**
(43) Veröffentlichungstag der Anmeldung: **24.02.2016**
(21) Anmeldenummer: 14181660.3
(22) Anmeldetag: 20.08.2014
(51) Int. Cl.: B29C 49/64

(54) **Formfüllmaschine und Verfahren zum Ausformen und Füllen von Behältern**

(71) Anmelder: Krones AG, 93073 Neutraubling (DE)
(72) Erfinder: Dachs, Alexander, 93073 Neutraubling (DE); Frankenberger, Guenter, 93073 Neutraubling (DE); Winzinger, Frank, 93073 Neutraubling (DE); Krueger, Jochen, 93073 Neutraubling (DE)
(74) Vertreter: Grünecker Patent- und Rechtsanwälte PartG mbB

(57) **Zusammenfassung**

Die vorliegende Erfindung stellt ein Verfahren zur Herstellung eines Kunststoffbehälters sowie zu dessen Befüllung mit mindestens einem Füllprodukt in einer Form zu Verfügung, wobei das Verfahren das Einbringen eines Preforms in die Form, insbesondere eine Blasform, und das zumindest teilweise Herstellen des Kunststoffbehälters durch Beaufschlagen des Preforms mit einem Füllprodukt mit einer ersten Temperatur umfasst, wobei der Kunststoffbehälter innerhalb der Form zumindest teilweise mit einem Füllprodukt mit einer zweiten, niedrigeren Temperatur befüllt wird.

## Beschreibung

Die Erfindung betrifft eine Formfüllmaschine und ein Verfahren zum Ausformen und Füllen von Kunststoffbehältern.

Bekanntermaßen lassen sich Kunststoffbehälter im Streckblasverfahren aus Vorformlingen (Preforms) herstellen.

Insbesondere handelt es sich bei den Kunststoffbehältern vor dem Expandieren um Vorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport vorgesehen ist.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wassers, hydraulisch zu einem Behälter geweitet wird. Danach wird das Fluid durch Pressluft verdrängt und läuft aus dem Behälter ab.

Beim hydraulischen Umformen von Vorformlingen zu Kunststoffflaschen muss einerseits ein Fluid verwendet werden, das warm genug ist, dass sich der Kunststoff ohne Weißbruch oder Trübung umformen lässt. Andererseits darf das Füllprodukt nicht zu warm sein, damit der Behälter bei der Entnahme aus der Form formstabil ist. Das erforderliche Erhitzen des Füllprodukts vor dem Einfüllen und das anschließende Abkühlen des befüllten Behälters sind energieintensiv und zeitaufwändig. Außerdem muss die Form zur Verhinderung der Kristallisation des Kunststoffs entsprechend schnell gekühlt werden. Weiterhin ist das Ausformen mit karbonisierten Füllprodukten nachteilig, da CO₂ sich nur zu geringen Mengen bei hohen Temperaturen lösen lässt.

Der vorliegenden Erfindung liegt somit die Aufgabe zugrunde, die oben genannten Nachteile zu überwinden. Ganz allgemein soll die Effizienz des Ausformens und Befüllens von Behältern hinsichtlich Energieverbrauchs, Zeitaufwands und Qualität des Endprodukts verbessert werden.

Diese Aufgaben werden mit einem Verfahren zur Herstellung eines Kunststoffbehälters sowie zu dessen Befüllung in einer Form nach den Ansprüchen 1 und 7 sowie einer Formfüllmaschine nach den Ansprüchen 8 und 9 gelöst. Vorteilhafte Ausführungsformen der Erfindung sind in den Unteransprüchen definiert.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Erfindungsgemäß umfasst das Verfahren zur Herstellung eines Kunststoffbehälters sowie zu dessen Befüllung mit mindestens einem Füllprodukt in einer Form das Einbringen eines Preforms, d. h. Vorformlings, in die Form, insbesondere in eine Blasform, und das zumindest teilweise Herstellen des Kunststoffbehälters durch Beaufschlagen des Preforms mit einem Füllprodukt mit einer ersten Temperatur, wobei der Kunststoffbehälter innerhalb der Form zumindest teilweise mit einem Füllprodukt mit einer zweiten, niedrigeren Temperatur befüllt wird.

Bei den herzustellenden und zu befüllenden Kunststoffbehältern kann es sich um Flaschen aus Polyester, insbesondere um PET-Flaschen handeln. Formen, insbesondere Blasformen zum Herstellen von Kunststoffbehältern sind im Stand der Technik hinlänglich bekannt und werden daher nicht weiter beschrieben. Im Allgemeinen umfasst eine solche Form zwei Formhälften und eine Bodenform, die nach Einbringen eines in einem Ofen aufgewärmten Preforms zum Ausformen eines Kunststoffbehälters aus dem Preform zusammengefahren werden. Nach Herstellung und Befüllung des Kunststoffbehälters wird die Form wieder geöffnet, um den gefüllten Behälter zu entnehmen.

Gemäß der vorliegenden Erfindung findet zumindest ein Teil des Ausformens des Preforms zum Kunststoffbehälter durch Einfüllen des im Wesentlichen flüssigen Füllprodukts in den Preform beziehungsweise in einen bereits teilweise ausgeformten Behälter statt. Hier und im Folgenden bedeutet im Wesentlichen flüssig, dass das Füllprodukt neben der eigentlichen Flüssigkeit auch gelöste oder nicht gelöste feste Komponenten aufweisen kann, beispielsweise in Form einer Emulsion oder von Fruchtstücken in Fruchtsäften.

Gemäß der vorliegenden Weiterbildung wird der Kunststoffbehälter zumindest teilweise durch Beaufschlagen des Preforms mit einem Füllprodukt mit einer ersten Temperatur ausgeformt. Die erste Temperatur wird hierbei in Abhängigkeit von dem Material des Kunststoffbehälters und/oder dem einzufüllenden Füllprodukt gewählt. Beispielsweise liegt die Glasübergangstemperatur von PET etwa bei 75-80°C. Für das erste Ausformen des Behälters sollte die erste Temperatur deutlich darüber liegen, mindestens bei 80°C bis hin zu 120°C. Klassisch werden Preforms bei einer Temperatur zwischen 95 und 115°C geblasen. Weiterhin kann die erste Temperatur für ein stilles, d. h. CO₂ freies, Füllprodukt höher gewählt werden als für ein karbonisiertes Füllprodukt. Die erste Temperatur kann dabei derart gewählt werden, dass sich der Kunststoff des Behälters durch das unter Druck in den Preform eingebrachte Füllprodukt verformen lässt. Insbesondere kann die erste Temperatur derart gewählt werden, dass die Temperatur des Kunststoffs während des teilweisen Ausformens des Behälters nicht unter die Glastemperatur des Kunststoffs fällt. Dadurch lässt sich insbesondere ein PET-Behälter ohne Weißbruch oder Trübung ausformen. Zum Ausformen des Kunststoffbehälters wird das Füllprodukt unter Druck in den Preform eingebracht, wobei der Druck in Abhängigkeit von dem verwendeten Kunststoff und dem einzufüllenden Füllprodukt gewählt werden kann. Beispielsweise kann zum Einbringen eines karbonisierten Füllprodukts ein relativ hoher Druck von 1,5 bis 9 bar gewählt werden, um ein Ausgasen der gelösten Kohlensäure aus dem Produkt zu vermeiden. Bei einer Karbonisierung von 7 g/l CO₂ (typisch für karbonisierte Softdrinks) liegt der Sättigungsdruck bei einer Temperatur von beispielsweise 40°C bei 6,6 bar (Überdruck). Bei einer Temperatur von 30°C stellt sich der Gleichgewichtsdruck bei 4,7 bar (Überdruck) ein. Um ein schnelles Ausgasen des CO₂ nach Öffnen der Blasform zu verhindern, sollte die Temperatur unter 10°C liegen, was einem Sättigungsdruck von 2,1 bar (Überdruck) entspricht. Auch kann der Druck entsprechend gewählt werden, um den Druck eines im Preform befindlichen Restgases zu überwinden.

Da das Füllprodukt im Allgemeinen eine dem Wasser ähnliche, hohe Wärmekapazität aufweist, ist ein Absenken der Temperatur des Kunststoffbehälters vor dem Öffnen der Form wünschenswert, um beispielweise ein Ausbeulen des noch warmen Behälterbodens oder einen allgemeinen Verlust der Behälterform zu vermeiden. Aus diesem Grund wird der Kunststoffbehälter nach seinem zumindest teilweisen Ausformen mittels des Füllprodukts mit der ersten Temperatur zumindest teilweise mit einem Füllprodukt mit einer zweiten, niedrigeren Temperatur befüllt. Die zweite Temperatur kann dabei erheblich unter der ersten Temperatur liegen und beispielsweise bei Zimmertemperatur oder Lagertemperatur liegen. Durch zumindest teilweises Befüllen des Behälters mit dem Füllprodukt mit der zweiten Temperatur sinkt die Temperatur der Behälterfüllung so weit ab, dass der Kunststoff ohne Kristallisation des verwendeten PETs formstabil wird. Außerdem kann die Behälterfüllung auch so weit abgekühlt werden, dass eine weitere Kühlung des befüllten Behälters entfallen kann.

Gemäß einer speziellen Weiterbildung kann das Füllprodukt mit der ersten Temperatur gleich dem Füllprodukt mit der zweiten Temperatur sein. Somit wird also nacheinander dasselbe Füllprodukt mit verschiedenen Temperaturen in den auszuformenden Behälter eingefüllt. Insbesondere bei stillen Getränken wie beispielsweise stillen Wässern, Säften oder Teeprodukten ist ein solches Verfahren von Vorteil, da ein Entbinden von CO₂ durch die höhere, erste Temperatur nicht vermieden werden muss.

Alternativ kann das Füllprodukt mit der ersten Temperatur von dem Füllprodukt mit der zweiten Temperatur verschieden sein. Dies bietet sich allgemein bei Mischgetränken wie beispielsweise Softdrinks an, wo das endgültige Getränk durch Beimischung von Sirup entsteht. Auch bei karbonisierten Getränken kann insbesondere das Füllprodukt mit niedrigerer Temperatur aufgrund des geringeren Sättigungsdrucks mit einem höheren Anteil an Kohlensäure angereichert werden als das Füllprodukt mit der ersten Temperatur, sodass der Kohlensäureanteil im Mischprodukt gemäß Rezept eingestellt werden kann. Ebenfalls ist bei der unten beschriebenen Weiterbildung, bei welcher zumindest ein Teil des eingefüllten Füllprodukts mit der ersten Temperatur durch das Füllprodukt mit der zweiten Temperatur ersetzt wird, die Verwendung unterschiedlicher Füllprodukte denkbar.

Gemäß einer weiteren Weiterbildung kann der Kunststoffbehälter durch Beaufschlagen des Preforms mit dem Füllprodukt mit der ersten Temperatur im Wesentlichen vollständig ausgeformt werden, wobei das Füllprodukt mit der ersten Temperatur zumindest teilweise durch das Füllprodukt mit der zweiten Temperatur beim Befüllen ersetzt wird. Dabei wird das Füllprodukt mit der zweiten Temperatur in den sich noch in der Form befindlichen, ausgeformten Behälter eingefüllt. Im Wesentlichen vollständig ausgeformt ist hierbei derart zu verstehen, dass der Behälter bis auf Fertigungstoleranzen seine endgültige Form erreicht hat. Gemäß dieser Weiterbildung ist der Behälter nach dem Einfüllen des Füllprodukts mit der ersten Temperatur zum großen Teil gefüllt, sodass das Einfüllen des Füllprodukts mit der zweiten Temperatur das bereits eingefüllte Füllprodukt mit der höheren Temperatur zumindest teilweise verdrängen muss.

Um ein Überlaufen des Behälters zu verhindern, kann daher das Füllprodukt mit der ersten Temperatur vor und / oder während des Befüllens mit dem Füllprodukt mit der zweiten Temperatur aktiv aus dem Kunststoffbehälter zurückgezogen werden oder, bei dichtend in Eingriff mit der Mündung des Behälters vorgesehener Füll- und / oder Blasdüse, durch eine dafür vorgesehene Rückführleitung gedrückt werden. Ein aktives Zurückziehen kann beispielsweise durch gesteuertes oder geregeltes Anheben eines Hubkolbens erfolgen, der in einer Druckkammer für das Füllprodukt mit der ersten Temperatur angeordnet ist. Dadurch wird das eingefüllte Füllprodukt mit der ersten Temperatur quasi aus dem Behälter heraus gesogen, wobei die Rückführleitung für das eingefüllte Füllprodukt und die Zuführleitung für das einzufüllende Füllprodukt vorteilhaft auf unterschiedlichen Höhen entlang der Längsausdehnung des Behälters angeordnet sind.

Das zurückgezogene Füllprodukt wird im Allgemeinen aufgrund von Abkühlungen im Kontakt mit den Zuführleitungen und der Behälterwand sowie von Durchmischung mit dem Füllprodukt mit der zweiten Temperatur eine geringere als die erste Temperatur aufweisen. Um eine gleichbleibende Qualität des hergestellten Behälters zu gewähren, kann das zurückgezogene Füllprodukt daher erneut auf die erste Temperatur erhitzt werden. Dies kann in der oben erwähnten Druckkammer und / oder in der Zuführ- bzw. Rückführleitung erfolgen.

Gemäß einer alternativen Weiterbildung kann der Kunststoffbehälter nur teilweise durch Beaufschlagen des Preforms mit dem Füllprodukt mit der ersten Temperatur ausgeformt werden, wobei die restliche Ausformung des Kunststoffbehälters durch das Befüllen mit dem Füllprodukt mit der zweiten Temperatur erfolgt. Ein solches "Vorblasen" des Preforms mit dem Füllprodukt mit der ersten Temperatur kann beispielsweise erfolgen, bis der Preform mindestens 50%, bevorzugt mindestens 80% seiner endgültigen Längsstreckung erfahren hat. Das Gros der Querverstreckung in radialer Richtung kann dann durch Einfüllen des Füllprodukts mit der niedrigeren Temperatur erfolgen. Bei diesem Verfahren wird ein zuvor im Ofen aufgetragenes Temperaturprofil des Preforms durch das Füllprodukt mit der ersten Temperatur nicht zu sehr beeinflusst, wobei die Behälterwand dennoch durch das restliche Ausformen mit dem Füllprodukt mit der niedrigeren Temperatur von innen abgekühlt werden kann. Somit kann auf eine separate Kühlung der Hohlform verzichtet werden. Auch hier ist das beschriebene Verfahren insbesondere für karbonisierte Getränke, wie Biere, von Vorteil.

Die oben genannten Aufgaben werden auch durch ein Verfahren zur Herstellung eines Kunststoffbehälters sowie zu dessen Befüllung mit einem Füllprodukt in einer Blasform gelöst, welches das Einbringen eines Preforms in die Blasform und das Beaufschlagen des Preforms mit einem gasförmigen Blasmedium umfasst, wobei der Kunststoffbehälter durch das Beaufschlagen mit dem gasförmigen Blasmedium nur teilweise ausgeformt wird, und wobei die restliche Ausformung des Kunststoffbehälters durch Befüllen mit dem Füllprodukt erfolgt. Anstelle des zuvor beschriebenen "Vorblasens" mit einem Füllprodukt mit einer ersten, höheren Temperatur wird gemäß dieser Weiterbildung ein gasförmiges Blasmedium, beispielsweise komprimierte Luft oder komprimiertes Inertgas bzw. CO₂, verwendet, um den Behälter teilweise auszuformen. Auch hier kann beispielsweise so lange komprimiertes Gas eingeblasen werden, bis der Preform mindestens 50%, bevorzugt mindestens 80% seiner endgültigen Längsstreckung erfahren hat. Das restliche Ausformen wird in dieser Weiterbildung durch Befüllen mit dem Füllprodukt unter Druck durchgeführt, wobei das zuvor eingeblasene Gas durch eine geeignete Leitung, beispielsweise eine teilweise zurückgezogene, hohlgebohrte Reckstange oder eine spezielle Blasdüse, von dem Füllprodukt aus dem Behälter gedrängt wird. Der Druck des Füllprodukts richtet sich auch hier wieder nach dem Material des Behälters und dem einzufüllenden Produkt. Beispielsweise kann der Druck um 1 bis 6 bar über dem Sättigungsdruck von Kohlensäure in einem karbonisierten Produkt liegen, um ein Entbinden von CO₂ aus dem eingefüllten Produkt zu vermeiden. Dadurch, dass der Behälter nach dem Beaufschlagen mit dem gasförmigen Medium bereits teilweise ausgeformt ist, kann beim Einfüllen des Füllprodukts ein relativ kaltes Produkt verwendet werden, sodass der dann ausgeformte Behälter schon in der Blasform ausreichend formstabil wird und somit nicht weiter gekühlt werden muss. Auch kann dadurch auf eine separate Kühlung der Blasform verzichtet werden.

Ebenso werden die oben genannten Aufgaben durch eine Formfüllmaschine zur Herstellung eines Kunststoffbehälters sowie zu dessen Befüllung mit einem Füllprodukt in einer Form gelöst, die eine Form zum Formen beziehungsweise Streckformen eines Kunststoffbehälters aus einem Preform, eine Zuführleitung zum Zuführen des Füllprodukts zu der Form, einen Druckerzeuger, um das Füllprodukt unter Druck in der Zuführleitung zu fördern, und eine regelbare Heizvorrichtung zum Erhitzen eines Teils des durch die Zuführleitung geführten Füllprodukts umfasst. Dieselben Variationen und Weiterbildungen, die zuvor im Zusammenhang mit dem erfindungsgemäßen Verfahren beschrieben wurden, können auch auf die hier erwähnte Formfüllmaschine angewendet werden. Insbesondere kann die Formfüllmaschine gemäß dieser Weiterbildung zum Ausführen der oben beschriebenen Verfahren zum zumindest teilweisen Ausformen des Behälters mit einem Füllprodukt mit einer ersten Temperatur und Befüllen mit einem Füllprodukt mit einer zweiten Temperatur verwendet werden.

Gemäß dieser Weiterbildung umfasst die Formfüllmaschine eine Zuführleitung zum Zuführen des Füllprodukts zu der Form. Dabei kann die Zuführleitung beispielsweise einen Vorratsbehälter für das Füllprodukt mit einer Fülldüse oder einer Füllleitung verbinden, die auf die Mündung des Preforms in der Form aufgesetzt oder durch diese in den Preform eingeführt wird. Als Füllleitung ist beispielsweise eine hohlgebohrte Reckstange vorstellbar, welche linear verfahrbar ausgebildet ist. Die Zuführleitung ist dabei für die zu transportierenden Füllprodukte und anzulegenden Drücke mit einem geeigneten Querschnitt ausgebildet. Ein Druckerzeuger ist derart an oder in der Zuführleitung angeordnet, dass das Füllprodukt mit dem gewünschten Druck in der Zuführleitung gefördert werden kann. Gemäß dieser Weiterbildung weist die Formfüllmaschine eine regelbare Heizvorrichtung zum Erhitzen von durch die Zuführleitung geführtem Füllprodukt auf. Die Heizvorrichtung kann beispielsweise als Durchlauferhitzer an der Zuführleitung angeordnet sein, sodass das durch die Zuführleitung geführte Füllprodukt auf eine gewünschte Temperatur erhitzt werden kann.

Um eine vorgegebene, erste Temperatur des erhitzten Füllprodukts beim Eintritt in den Preform zu garantieren, kann die Heizvorrichtung mittels einer Steuer- und/oder Regeleinrichtung der Formfüllmaschine in Abhängigkeit von einem Fluss des Produkts in der Zuführleitung sowie der Wärmekapazität des Produkts geregelt werden. Außerdem kann die Heizvorrichtung zeit- oder füllstandsabhängig betrieben werden, sodass wie oben beschrieben zunächst erhitztes Füllprodukt in den Preform gepresst wird, um anschließend das Füllprodukt mit einer niedrigeren Temperatur einzufüllen. Zur Regelung der Heizvorrichtung können geeignete Füllstandssensoren, beispielsweise als Wiegeelement, an der Form vorgesehen sein. Ebenso können Temperatursensoren, Strömungssensoren und/oder Drucksensoren in der Zuführleitung stromauf- bzw. stromabwärts von der Heizvorrichtung vorgesehen werden. Gemäß dieser Weiterbildung können die oben beschriebenen Verfahren zum Ausformen und Befüllen mit verschiedenen Temperaturen mit einer einzigen Zuführleitung und einem einzigen Vorratsbehälter umgesetzt werden, wodurch sich eine besonders kompakte Ausführung der Formfüllmaschine ergibt.

Gemäß einer alternativen Weiterbildung kann die Formfüllmaschine zur Herstellung eines Kunststoffbehälters sowie zu dessen Befüllung mit einem Füllprodukt in einer Form eine Form zum Ausformen beziehungsweise Streckformen eines Kunststoffbehälters aus einem Preform, eine erste Zuführleitung zum Zuführen eines Mediums zu der Form zum zumindest teilweisen Ausformen des Kunststoffbehälters und einen Druckerzeuger umfassen, um das Medium unter Druck in der ersten Zuführleitung zu fördern, wobei eine zweite Zuführleitung zum Zuführen des Füllprodukts zu der Form vorgesehen ist. Optional kann ein weiterer Druckerzeuger vorgesehen sein, um das Füllprodukt unter Druck in der zweiten Zuführleitung zu fördern. Alternativ kann das Fördern des Füllprodukts unter Druck jedoch auch mit demselben Druckerzeuger erfolgen, der dem Fördern des Mediums dient. Gemäß dieser Weiterbildung werden für das Medium und das Füllprodukt mit der zweiten Temperatur separate Zuführleitungen, optional mit separaten Druckerzeugern, vorgesehen, sodass das Medium und das Füllprodukt unabhängig voneinander in den auszuformenden Behälter eingebracht werden können. Dabei kann es sich bei dem Medium um das oben beschriebene gasförmige Medium handeln, welches zum teilweisen Ausformen des Kunststoffbehälters in den Preform geblasen wird. Ebenso kann es sich bei dem Medium um das oben beschriebene Füllprodukt mit einer ersten, höheren Temperatur handeln. Insbesondere sind mit dieser Weiterbildung Varianten möglich, bei denen das Füllprodukt mit der ersten Temperatur wie oben beschrieben verschieden von dem Füllprodukt mit der zweiten Temperatur ist.

Die erste und die zweite Zuführleitung können in eine gemeinsame Blas-Fülldüse oder eine gemeinsame Füllleitung münden oder aber auch in separate Füllleitungen. Insbesondere bei dem oben beschriebenen Zurückziehen des Füllprodukts mit der ersten Temperatur empfiehlt sich eine separate Fülldüse bzw. Füllleitung für das Füllprodukt mit der zweiten Temperatur. Die erste und die zweite Zuführleitung können je einen Vorratsbehälter für das Medium bzw. das Füllprodukt mit der bzw. den Fülldüsen oder Füllleitungen verbinden. Der Druck des Mediums bzw. Füllprodukts kann wie oben beschrieben gewählt und insbesondere mittels einer Steuer- und/oder Regeleinrichtung über eine Steuerung bzw. Regelung des jeweiligen Druckerzeugers in Abhängigkeit von dem auszuformenden Material und dem zu fördernden Produkt eingestellt werden.

Gemäß einer speziellen Weiterbildung kann es sich bei dem gasförmigen Medium um ein komprimiertes Gas handeln, wobei der erste Druckerzeuger ein Kompressor sein kann. Das Gas kann Luft, ein Inertgas oder CO₂ sein. Anstelle des Kompressors kann auch eine Pumpe eingesetzt werden. Zum "Vorblasen" des Preforms kann das Gas beispielsweise auf Drücke zwischen 10 und 40 bar, bevorzugt zwischen 20 und 30 bar komprimiert werden. Bei Verwendung eines komprimierten Gases als Medium kann zum Austreten des Gases beim Einfüllen des Füllprodukts eine separate Leitung im Mündungsbereich des Behälters vorgesehen werden. Alternativ kann das Gas durch das eingefüllte Füllprodukt unter Druck in die erste Zuführleitung zurückgedrückt werden, um dort bzw. in dem zugehörigen Vorratsbehälter unter Druck gespeichert zu werden.

Gemäß einer alternativen Weiterbildung kann das Medium das Füllprodukt und/oder ein weiteres Füllprodukt umfassen, wobei der erste Druckerzeuger eine Pumpe oder eine Druckkammer mit Hubkolben umfasst. Insbesondere kann das Medium durch das Füllprodukt bei einer anderen, höheren Temperatur als das Füllprodukt der zweiten Zuführleitung oder durch ein anderes Füllprodukt, bevorzugt mit der ersten, höheren Temperatur gegeben sein. Die Zuführleitungen und Druckerzeuger können dabei entsprechend ausgelegt sein. Insbesondere kann der erste Druckerzeuger eine Pumpe zum Fördern des flüssigen Mediums umfassen. Alternativ kann der Druck zum Fördern des flüssigen Mediums mittels einer Druckkammer mit Hubkolben erzeugt werden. Durch gesteuertes oder geregeltes Absenken des Hubkolben in die mit dem Medium gefüllte Druckkammer kann eine vorgegebene Menge an Medium aus der Druckkammer durch die erste Zuführleitung in den Preform gepresst werden. Die Druckkammer kann also gleichzeitig als Dosierkammer dienen, wobei die anfängliche Stellung des Hubkolbens mittels der Steuer- und/oder Regeleinrichtung entsprechend der einzufüllenden Menge an Medium eingestellt werden kann.

Die zuvor beschriebene Druckkammer kann über entsprechende Ansteuerung des Hubkolbens auch zum zumindest teilweise Zurückziehen des Mediums aus dem Behälter eingesetzt werden, um wie oben beschrieben das Füllprodukt mit der ersten Temperatur zumindest teilweise durch das Füllprodukt mit der zweiten, niedrigeren Temperatur zu ersetzen. In diesem Fall können die Druckkammer und/oder die erste Zuführleitung wie bereits beschrieben eine Heizvorrichtung zum Erhitzen des zurückgezogenen Füllprodukts auf die erste Temperatur aufweisen. Ebenso kann durch Anbinden der Druckkammer an den Vorratsbehälter für das Medium die aufgrund eines in dem Behälter verbliebenen Teils des Mediums nicht mehr vollständig gefüllte Druckkammer wieder aufgefüllt werden.

Gemäß einer weiteren Weiterbildung können das Medium und/oder das Füllprodukt über eine gemeinsame Zuführung, insbesondere eine hohlgebohrte Reckstange, in den auszuformenden Kunststoffbehälter geführt werden. Reckstangen zum Streckformen von Kunststoffbehältern sind im Stand der Technik wohlbekannt. Gemäß dieser Weiterbildung ist die Reckstange jedoch hohl, wobei eine Öffnung am unteren Ende und / oder seitliche Öffnungen entlang der Reckstange zum Austritt des eingebrachten Mediums bzw. Füllprodukts dienen. Die Reckstange ist dabei linear verfahrbar ausgebildet, sodass eine Befüllung in beliebiger Höhe entlang der Längsrichtung des Behälters erfolgen kann. Bei Verwendung einer Reckstange mit seitlichen Öffnungen ergibt sich eine besonders gute Durchmischung des Füllprodukts mit der ersten Temperatur mit dem Füllprodukt mit der zweiten Temperatur.

Alternativ kann die Formfüllmaschine separate Zuführungen für das Medium und das Füllprodukt aufweisen. Beispielsweise kann das Füllprodukt mit der ersten Temperatur über die oben beschriebene Reckstange eingebracht werden, während das Füllprodukt mit der zweiten Temperatur über eine separate Füllleitung eingebracht wird. Die Öffnung der linear verfahrbaren Reckstange ist dann beim Zurückziehen des Füllprodukts mit der ersten Temperatur möglichst weit von der Öffnung der separaten Füllleitung entfernt, um möglichst wenig Füllprodukt mit der zweiten Temperatur zurückzuziehen. Beispielsweise kann die Öffnung der separaten Füllleitung im Mündungsbereich des Behälters angeordnet sein, während die Öffnung der Reckstange im Bodenbereich des Behälters verbleibt.

Die Formfüllmaschine kann weiterhin mindestens ein Regelventil umfassen, um die Zufuhr des Mediums und/oder des Füllprodukts zu der Form bzw. in den Behälter zu regulieren. Dabei können Ventile in den Zuführleitungen, den Füllleitungen, im Zulauf zu der oder den Druckkammern, im Auslauf des oder der Vorratsbehälter und/oder an eventuellen Austritts- bzw. Rückführleitungen vorgesehen werden. Die Regelventile können dabei von einer gemeinsamen oder separaten Steuer- und/oder Regeleinrichtungen geöffnet und geschlossen werden, um die oben beschriebenen Verfahren zum Ausformen und Befüllen des Kunststoffbehälters zu realisieren.

Die beschriebenen Weiterbildungen gestatten eine energieeffiziente und zuverlässige Herstellung und Befüllung von Kunststoffbehältern mit hoher Qualität. Durch "Vorblasen" mit komprimiertem Gas oder heißem Füllprodukt lässt sich der Bedarf an Energie zur Kompression bzw. zum Erhitzen des Füllprodukts reduzieren, wenn ein Teil des Ausformens durch Einfüllen des kalten Füllprodukts geschieht. Dadurch lässt sich auch gleichzeitig der befüllte Behälter kühlen und somit formstabil aushärten. Auf eine zusätzliche Kühlung im Nachlauf zur Befüllung sowie eine Kühlung der Form kann somit verzichtet werden. Ebenso lässt sich durch Zurückziehen der heißen Formflüssigkeit und Ersetzen derselben durch kaltes Füllprodukt ein Großteil der eingesetzten Energie zurückgewinnen, ohne auf die Vorteile des schnellen Abkühlens verzichten zu müssen. Da somit zumindest ein Teil des Füllprodukts kalt eingefüllt wird, sind die beschriebenen Weiterbildungen besonders zum Abfüllen karbonisierter Getränke geeignet. Außerdem lassen sich gleichzeitig auf einfache Weise Mischgetränke herstellen.

Anstatt der oben beschriebenen Verfahren und Vorrichtungen können die Vorformlinge auch direkt von einer stromaufwärts angeordneten Spritzgussvorrichtung erzeugt und im noch aufgewärmten Zustand zu der Form- und Füllvorrichtung weitertransportiert werden. Energetisch gesehen bietet das den Vorteil, dass ein Teil der Wärme nicht an die Umgebung verloren geht. Unter Umständen muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt. Werden die Vorformlinge innerhalb eines Reinraums spritzgegossen, so ist unter Umständen keine weitere Sterilisation der Vorformlinge nötig, wenn sich der Reinraum bis zu einer Position hin erstreckt, an der ein Verschluss auf den Behälter nach dem Befüllen aufgebracht wird.

Insbesondere kann die Herstellung bzw. Expansion und das Befüllen der Behälter innerhalb eines Raums mit kontaminationsarmer Umgebung stattfinden. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird.
- Die Antriebe für verschiedenste Bewegungen der Kavität sind außerhalb des Reinraums angeordnet, so beispielsweise die Antriebe für das Öffnen und Schließen der Kavität (Form) und/oder die für das Bewegen einer Reckstange und/oder die für ein Anheben oder Senken eines Behälters und/oder die Bewegung einer Blas- oder Fülldüse.
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

Weitere Merkmale und beispielshafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 zeigt eine schematische Aufsicht einer beispielhaften Ausführung einer Vorrichtung zur Herstellung und zum Befüllen von Kunststoffbehältern gemäß der vorliegenden Erfindung.
Figur 2 zeigt eine Seitenansicht einer beispielhaften Ausführung einer Formfüllmaschine gemäß der vorliegenden Erfindung.
Figur 3 zeigt schematisch eine Ventilanordnung zum Ausformen eines Behälters in zwei Schritten.
Figuren 4a-c zeigen unterschiedliche Ausführungsformen des Ventilblocks zum Ausformen eines Behälters in zwei Schritten.
Figuren 5a-k zeigen Momentaufnahmen eines Verfahrens zum Formfüllen eines Behälters, bei welchem die zum Ausformen verwendete Flüssigkeit größtenteils aus dem ausgeformten Behälter zurückgezogen wird.

Im Folgenden sind gleiche oder gleichartige Elemente mit gleichen Bezugszeichen bezeichnet. Auf eine wiederholte Beschreibung dieser Elemente wird aus Gründen der Klarheit verzichtet. Zudem versteht sich, dass in den folgenden Ausführungsformen einige oder alle Elemente durch gleichartige, im Zusammenhang mit anderen Ausführungsformen beschriebene Elemente ersetzt oder kombiniert werden können.

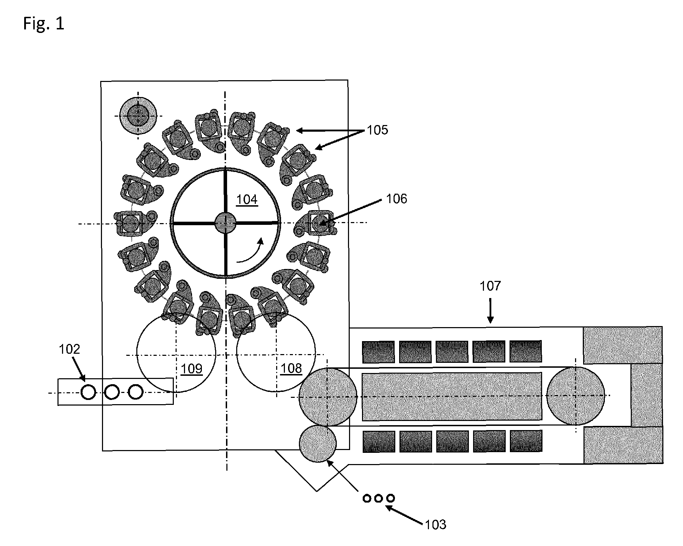

Figur 1 zeigt eine schematische Aufsicht einer beispielhaften Ausführung einer Vorrichtung zur Herstellung und zum Befüllen von Kunststoffbehältern gemäß der vorliegenden Erfindung. Die Vorrichtung ist in dieser beispielhaften Ausführung mit einem Rundläufer 104 ausgebildet, entlang dessen Umfang eine Vielzahl von Behandlungsstationen 105 in Form der weiter unten beschriebenen Füllformmaschinen umlaufen. Jede der umlaufenden Behandlungsstationen umfasst dabei eine Hohlform 106 zum Ausformen und Befüllen der Kunststoffbehälter.

Insbesondere ist eine Vielzahl von Form- und Füllstationen vorgesehen, welche insbesondere am Außenumfang eines sich kontinuierlich drehenden Rundläufers angeordnet sind. Bei dem Rundläufer handelt es sich vorzugsweise um ein Rad.

Der Rundläufer dreht sich insbesondere um eine vertikale Achse, deren Verlängerung den Erdmittelpunkt schneidet.

Insbesondere sind die Stationen alle in äquidistanten Abständen zueinander angeordnet. Die Stationen weisen insbesondere Kavitäten auf, innerhalb derer die Behälter gegen die inneren Wände der Kavität expandiert werden, so dass die fertig ausgeformten Behälter die (negative) Form der inneren Wände der Kavität erhalten.

Die hier schematisch dargestellten Preformen 103 laufen durch einen Ofen 107, beispielsweise einen Infrarotofen oder einen Mikrowellenofen, in dem die Preformen 103 mit einem gewünschten Temperaturprofil entlang ihrer Längsachse erhitzt werden. Während es sich beim Mikrowellenofen bevorzugt um einen Rundläufer handelt, werden die Vorformlinge beim Infrarotofen zumindest einen Teil der Strecke geradlinig transportiert. Die erhitzten Preformen 103 werden dann über einen Einlaufstern 108 an den Rundläufer 104 übergeben und dabei insbesondere in die geöffneten Hohlformen 106 eingebracht. Während des Umlaufs um den Rundläufer 104 werden die Preformen innerhalb der nunmehr geschlossenen Hohlformen 106 der Behandlungsstationen 105 ausgeformt und befüllt. Vor Übergabe an einen Auslaufstern 109 werden die Hohlformen wieder geöffnet, um die nunmehr vollständig ausgeformten und befüllten Kunststoffbehälter entnehmen zu können. Das in dem Ofen 107 aufgebrachte Temperaturprofil kann dabei in Abhängigkeit von der gewünschten Form des Kunststoffbehälters und dessen Material vorgegeben werden. Öfen zum Vorerhitzen von Preformen sind im Stand der Technik hinreichend bekannt und werden daher hier nicht weiter beschrieben. Von dem Auslaufstern 109 können die fertigen und befüllten Behälter 102 zur weiteren Behandlung an ein Transportband übergeben werden. Es versteht sich, dass auch weitere Behandlungsstationen, wie beispielsweise Verschließeinheiten und/oder Etikettierstationen, in der Peripherie des Rundläufers 104 oder als Teil der Formfüllmaschinen 105 vorgesehen werden können. Die folgenden Beschreibungen beschränken sich lediglich des klareren Verständnisses halber auf das Verfahren zum Ausformen und Befüllen der Kunststoffbehälter. Insbesondere ist daran gedacht, die Behälter noch innerhalb dieser Kavität zu verschließen. Hierfür kann an der Peripherie des Rundläufers eine Verschlusszuführung angeordnet sein.

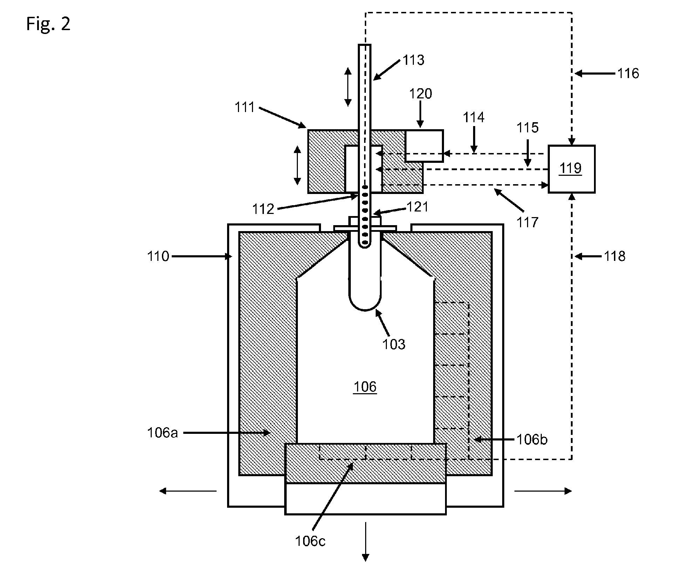

Figur 2 zeigt eine Seitenansicht einer beispielhaften Ausführung einer Formfüllmaschine gemäß der vorliegenden Erfindung. Die Formfüllmaschine umfasst eine Form, die als Hohlform ausgebildet ist, wobei die Form in der hier dargestellten nicht limitierenden Ausführung aus zwei mittels eines mehrteiligen Formträgers 110 in die Pfeilrichtungen verfahrbaren bzw. verschwenkbaren Seitenteilen 106a und 106b und einem entlang der Pfeilrichtung verfahrbaren Bodenteil 106c besteht. Nach Einbringen eins Preforms 103 wird die Form, so wie allgemein bekannt, durch Zusammenfahren der Formteile 106a-c geschlossen.

Die Form kann dabei derart ausgebildet werden, dass sie druckdicht mit dem Preform 103 abschließt und somit eine druckdichte Hohlform 106 bildet, die mittels eines Medienverteilers 119, beispielsweise eines gemeinsamen Drehverteilers für die Vielzahl der Behandlungsstationen, über Absaugleitungen 118 für die Hohlform zur Unterstützung des Ausformvorgangs auf Unterdruck evakuiert werden kann.

Durch lineares Verfahren kann, entsprechend der im Stand der Technik bekannten Blasdüse, eine Fluiddüse eines Ventilblocks 111 druckdicht auf den Mündungsbereich 121 des Preforms aufgesetzt werden, über die die oben beschriebenen Medien und / oder Füllprodukte in den Preform bzw. den auszuformenden Kunststoffbehälter mit dem jeweils gewünschten Druck eingespritzt bzw. -geblasen werden können. Zu diesem Zweck ist der Ventilblock 111 über eine Zuführleitung für ein Formfluid 114 und / oder eine Zuführleitung für ein Füllprodukt 115 mit dem Medienverteiler 119 verbunden. Regelbare Ventile im Ventilblock 111 regeln dabei die Zufuhr von Formfluid und / oder Füllprodukt. Bei dem Formfluid kann es sich wie oben beschrieben um ein gasförmiges Medium handeln, welches beispielsweise mit einem Kompressor 120 auf den zum Ausformen des Preforms erforderlichen Druck komprimiert wird. Alternativ kann das Formfluid wie oben beschrieben jedoch auch ein Füllprodukt bzw. das Füllprodukt mit einer ersten Temperatur sein. Auch in diesem Fall kann, insbesondere in Abhängigkeit von dem auszuformenden Material und dem Füllprodukt, ein geeigneter Überdruck in dem Fluid erzeugt werden. Gleiches gilt für das Füllprodukt in der Zuführleitung 115, wobei gemäß einer Weiterbildung das restliche Ausformen des Behälters mit diesem Füllprodukt vorgenommen werden kann.

Zum Streckformen kann die hier dargestellte, nicht limitierende Formfüllmaschine weiterhin eine Reckstange 113 aufweisen, die entlang der gezeigten Pfeilrichtung in den Preform hineingefahren werden kann, um den Preform auf seine Solllänge, die der Höhe des fertigen Kunststoffbehälters entspricht, zu strecken. Bei Verwendung einer hohlgebohrten Reckstange 113 kann weiterhin über eine hier exemplarisch als Absaugleitung 116 gezeigte Verbindung mit dem Medienverteiler 119 bereits eingefülltes Medium oder Füllprodukt wieder aus dem Behälter entweichen oder aktiv abgezogen werden. Auch kann die Reckstange 113 zum Befüllen und / oder weiteren Ausformen des Behälters verwendet werden. Dazu kann die Reckstange 113 an ihrem der Hohlform zugewandten Ende eine Öffnung und / oder entlang ihrer Längsrichtung angeordnete Öffnungen aufweisen. Letztere können insbesondere zum effektiven Durchmischen warmen und kalten Füllprodukts gemäß der oben beschriebenen Weiterbildung dienen.

Es versteht sich, dass die in Figur 2 gezeigte Anordnung, insbesondere der Zuführleitungen bzw. Absaugleitungen 114 bis 117, lediglich eine exemplarische Weiterbildung darstellt. Eine Vielzahl alternativer Weiterbildungen ist denkbar, von denen im Folgenden einige explizit beschrieben werden.

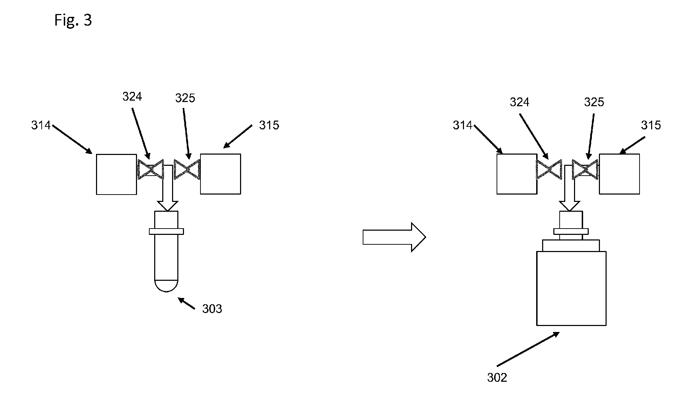

Figur 3 zeigt beispielsweise schematisch eine Ventilanordnung zum Ausformen eines Behälters in zwei Schritten. Der Ventilblock umfasst in dieser Weiterbildung eine erste Zuführleitung 314 zum Zuführen eines Mediums zu der (nicht gezeigten) Fülldüse im Verbindungsbereich 112 des Ventilkopfs, und damit in den Preform 303, zum teilweisen Ausformen des Preforms 303 sowie eine zweite Zuführleitung 315 zum Zuführen des Füllprodukts in den auszuformenden Behälter 302. Sowohl das Medium als auch das Füllprodukt werden unter Druck in den Preform bzw. den Behälter eingefüllt, um die Wände des auszuformenden Behälters nach außen in Richtung Innenwand der Hohlform (nicht dargestellt) zu dehnen. Dabei wird ein erster Teil dieses Ausformungsvorgangs durch Öffnen des Ventils 324 in der ersten Zuführleitung 314 durchgeführt, während das restliche Ausformen des Behälters bis zu dessen endgültiger Form durch Öffnen des Ventils 325 in der zweiten Zuführleitung 315 erfolgt. Die beiden Phasen des Ausformens sind in der Figur anhand der Pfeile auf der linken bzw. rechten Seite der Figur dargestellt. Der links dargestellte erste Schritt des Ausformens entspricht somit einem "Vorblasen" des Preforms auf eine Zwischenform, die beispielsweise mindestens 50 %, bevorzugt mindestens 80 % der endgültigen Längsstreckung des Preforms hat. Das "Vorblasen" kann dabei durch eine hier nicht dargestellte Reckstange unterstützt werden.

Insbesondere kann der erste Schritt mit einem komprimierten Gas, beispielsweise einem Inertgas oder CO₂, als Medium durchgeführt werden, sodass ein vorzeitiges Abkühlen des zu streckenden Kunststoffs unter dessen Kristallisationstemperatur verhindert werden kann. Anschließend kann durch Einfüllen von relativ kühlem Füllprodukt unter Druck sowohl das restliche Ausformen als auch das Abkühlen des Behälters vorgenommen werden. Somit eignet sich dieses Verfahren insbesondere für karbonisierte Getränke, die möglichst kalt eingefüllt werden sollen, um ein Entbinden der gelösten Kohlensäure zu vermeiden. Zum Entweichen des Gases beim Einfüllen des Füllprodukts kann die oben erwähnte hohlgebohrte Reckstange dienen, die dabei entsprechend zurückgezogen wird. Alternativ kann eine spezielle Blasdüse mit einem Ventil verwendet werden, das zum Entweichen des Gases geöffnet wird. Da der Behälter nur teilweise mit komprimiertem Gas ausgeformt wird, sinkt der Energiebedarf für das Bereitstellen des Gases. Zusätzlich kann mit relativ kühlem Füllprodukt "fertiggeblasen" werden, sodass der Wärmebedarf im Vergleich zum vollständigen Ausformen mit warmem Füllprodukt (siehe unten) geringer ist.

In einer alternativen Weiterbildung ist das Medium das Füllprodukt mit einer ersten, relativ hohen Temperatur, die entsprechend gewählt werden kann, um die Kristallisation des Kunststoffs während des Streckens zu vermeiden. Ebenso kann ein weiteres Füllprodukt mit dieser ersten Temperatur eingefüllt werden, insbesondere falls es sich um Mischgetränke handelt. Da nur der erste Teil des Ausformens mit dem heißen Füllprodukt als Medium erfolgt, kann die Mischtemperatur nach Einfüllen des kalten Füllprodukts durch die zweite Zuführleitung 315 gegenüber dem ausschließlichen Ausformen mit heißem Füllprodukt reduziert werden, sodass eine nachfolgende Kühlvorrichtung mit geringerer Leistung ausgelegt werden kann oder entfallen kann.

Bei beiden Varianten kann durch Einfüllen des Füllprodukts mit geringer Temperatur zum restlichen Ausformen auf eine separate Kühlung für die Form verzichtet werden, da der Behälter bereits durch das eingefüllte Produkt abgekühlt wird.

Alternativ ist aber auch denkbar, eine zusätzliche separate Kühlung für die Form oder den Behälter vorzusehen. Das kann entweder direkt in der Form, beispielsweise durch Kühlung der Bodenform geschehen oder im Rahmen der weiteren Transportstrecke nach der Formfüllmaschine. Beispielsweise sind dort Düsen vorgesehen, die den Behälter von unten mit kaltem Wasser oder Luft beaufschlagen.

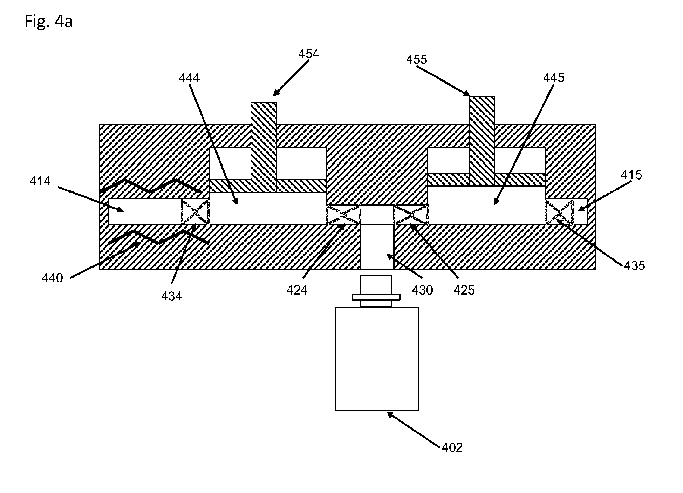

Die Figuren 4a-c zeigen verschiedene Ausführungsformen des Ventilblocks zum Ausformen eines Behälters in zwei Schritten, insbesondere für das "Vorblasen" mit heißem Füllprodukt und "Fertigblasen" mit kaltem Füllprodukt.

Figur 4a zeigt eine erste Variante, bei der die erste Zuführleitung 414 und die zweite Zuführleitung 415 jeweils über eine eigene Druckkammer 444 bzw. 445 verfügen. Die hier dargestellten Druckkammern stellen eine Möglichkeit dar, durch Bewegung eines entsprechenden Hubkolbens 454 bzw. 455 einen gewünschten Druck in einem in den Behälter 402 eingebrachten Fluid, insbesondere dem im Wesentlichen flüssigen Füllprodukt, aufzubauen. Zu diesem Zweck wird zunächst das jeweilige stromabwärts gelegene Ventil 424 bzw. 425 geschlossen, um die jeweilige Druckkammer durch Öffnen des jeweiligen stromaufwärts gelegenen Ventils 434 bzw. 435 bis zu einem vorgegebenen Füllstand zu füllen. Der Füllstand wird dabei durch die Endstellung des Hubkolbens 454 bzw. 455 beim Befüllen der Druckkammer eingestellt, sodass mit einer einzigen Druckkammer unterschiedliche Dosiervolumina eingestellt werden können. Der Hubkolben kann hierzu mittels einer Steuer- und/oder Regeleinrichtung und eines Servomotors entsprechend verfahren werden. Nach Befüllen der Druckkammer wird das jeweilige Einlassventil 434 bzw. 435 geschlossen und das jeweilige Auslassventil 424 bzw. 425 geöffnet. Durch Absenken des Hubkolbens wird die Druckkammer dann durch den gemeinsamen Einfüllkanal 430 in den Behälter 402 entleert. Da der Mündungsbereich des Behälters druckdicht mit dem Einfüllkanal 430 verbunden ist, kann der Behälter bzw. der Preform durch den aufgebauten Druck gestreckt und ausgeformt werden.

Die Steuer- und/oder Regeleinrichtung (nicht dargestellt) regelt hierbei das Öffnen und Schließen der Ventile sowie die Bewegung der Hubkolben. Im Normalfall ist stets nur eines der Einlassventile 424 und 425 geöffnet. Bei Mischgetränken können jedoch auch beide Einlassventile gleichzeitig geöffnet sein, um verschiedene Füllprodukte durch den Einlasskanal 430 in den Behälter zu füllen.

Die Figur zeigt weiterhin eine Heizvorrichtung 440 in Form eines Durchlauferhitzers zum Erhitzen des durch die Zuführleitung 414 geförderten Füllprodukts auf die zuvor beschriebene erste Temperatur. Diese kann wie beschrieben derart gewählt werden, dass der Kunststoff ohne Kristallisation gestreckt werden kann. Es versteht sich, dass die Heizvorrichtung 440 auch an anderer Stelle, beispielsweise an der Druckkammer 444, angebracht sein kann. Ebenso kann auch die zweite Zuführleitung 415 über eine eigenständige Heizvorrichtung verfügen, um die Temperatur des Füllprodukts in der zweiten Zuführleitung gezielt einstellen zu können. Die Heizvorrichtungen können regelbar ausgebildet sein und durch die Steuer- und/oder Regeleinrichtung gesteuert bzw. geregelt werden.

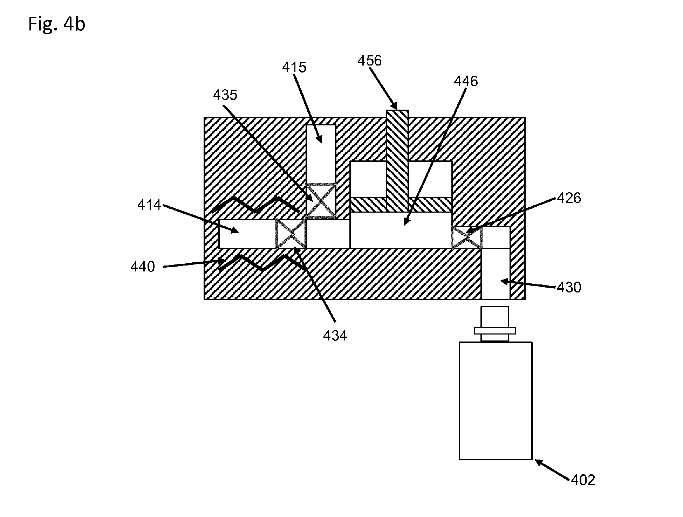

Figur 4b zeigt eine alternative Variante zu der in Figur 4a dargestellten Weiterbildung. Anders als in Figur 4a ist in Figur 4b lediglich eine gemeinsame Druckkammer 446 mit Hubkolben 456 für das aus der ersten Zuführleitung 414 zugeführte Medium und das aus der zweiten Zuführleitung 415 zugeführte Füllprodukt vorgesehen. Die Zufuhr des Mediums bzw. des Füllprodukts wird wie zuvor über die Einlassventile 434 bzw. 435 geregelt. Da nur eine Druckkammer vorgesehen ist, wird auch nur ein Auslassventil 426 zum Einfüllkanal 430 hin benötigt. Die Regelung der Ventile und des Hubkolbens entspricht der Weiterbildung der Figur 4a und wird daher hier nicht wiederholt beschrieben. Auch in dieser Weiterbildung ist ein Mischen von Füllprodukten, in diesem Fall in der Druckkammer 446, möglich. Erneut verfügt die erste Zuführleitung über eine Heizvorrichtung 440. Entsprechende Weiterbildungen wie in Figur 4a sind auch hier denkbar.

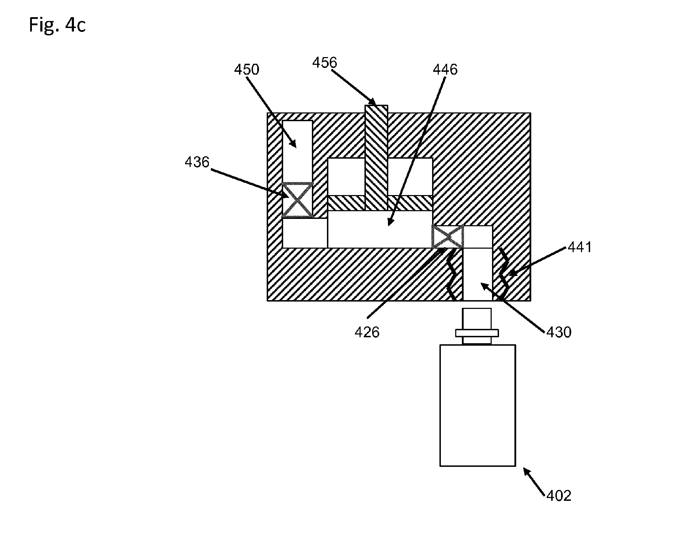

Die in Figur 4c dargestellte Variante unterscheidet sich von den Weiterbildungen der Figuren 4a und 4b insofern, als nunmehr eine einzige Zuführleitung 450 für ein einziges Füllprodukt vorgesehen ist. Entsprechend ist erneut nur eine Druckkammer 446 mit Hubkolben 456 vorgesehen, deren Einlass und Auslass über regelbare Ventile 436 und 426 geregelt werden. Entlang des Einfüllkanals 430 ist nunmehr eine Heizvorrichtung 441 vorgesehen, die von der Steuer- und/oder Regeleinrichtung nur dann aktiviert wird, wenn zum "Vorblasen" mit heißen Füllprodukt das durch den Kanal gepresste Füllprodukt auf die erste Temperatur erhitzt werden soll. Es versteht sich, dass die Heizvorrichtung auch an der Druckkammer 446 angeordnet werden kann, um beispielsweise nur die erste Charge des Füllprodukts zum "Vorblasen" des Behälters 402 auf die erste Temperatur zu erhitzten. Das restliche Ausformen des Behälters erfolgt dann mit deaktivierter Heizvorrichtung und Füllprodukt mit der zweiten, niedrigeren Temperatur.

Weitere Ausführungsformen, beispielsweise mit kontinuierlichen Druckerzeugern, wie Pumpen, und/oder zusätzlichen Zuführ- bzw. Absaugleitungen sind denkbar, solange ein Ausformen des Behälters in wenigstens zwei Schritten, insbesondere mit Fluiden unterschiedlicher Temperaturen, möglich ist.

Die erste Temperatur des Füllprodukts zum "Vorblasen" kann durch Regelung der Heizleistung der Heizvorrichtung in Abhängigkeit von der Temperatur des Preforms beim Austritt aus dem Ofen eingestellt werden. Dabei kann die Temperatur des Preforms mit einer Temperatursonde, beispielsweise in Form eines Pyrometers, am Ausgang des Ofens gemessen werden. Die erste Temperatur kann dabei insbesondere derart gewählt werden, dass sie gleich der durchschnittlichen Oberflächentemperatur des Preforms ist. Dadurch wird das zuvor im Ofen aufgetragene Temperaturprofil des Preforms nicht zu stark beeinflusst, während der Kunststoff durch den zweiten Schritt des Einfüllens eines kalten Füllprodukts weiterhin, wie im normalen Blasprozess durch Kontakt mit der Blasformwand, "abgeschreckt" werden kann. Auch hier ist das Verfahren besonders für CO₂-haltige Getränke von Vorteil, die bevorzugt kalt abgefüllt werden, um eine gute Lösbarkeit von CO₂ im Produkt zu erhalten.

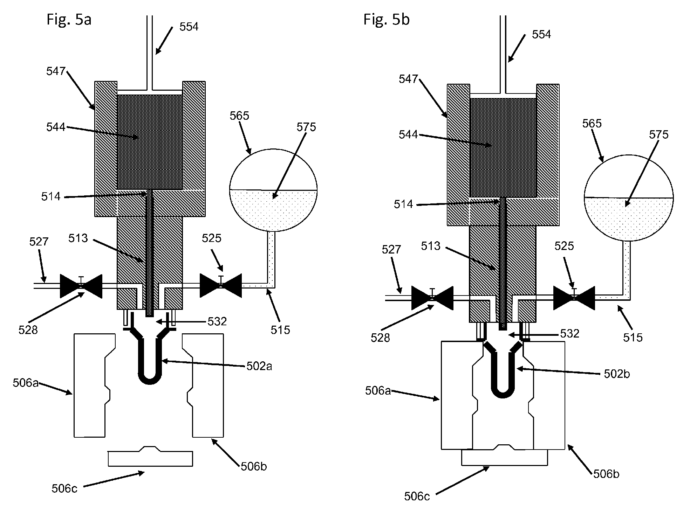

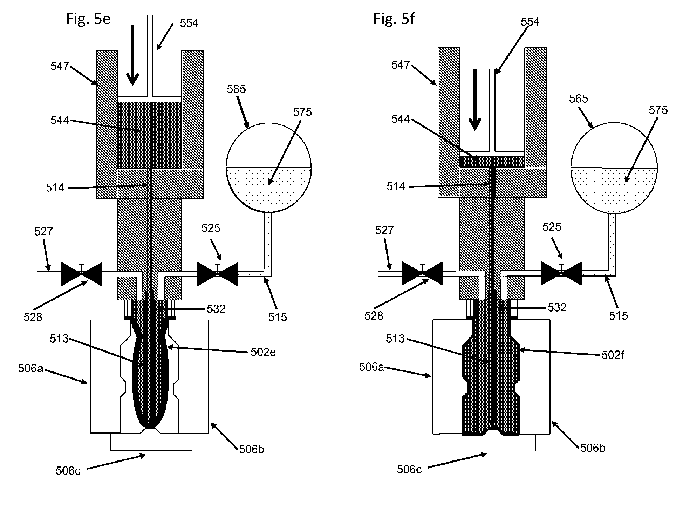

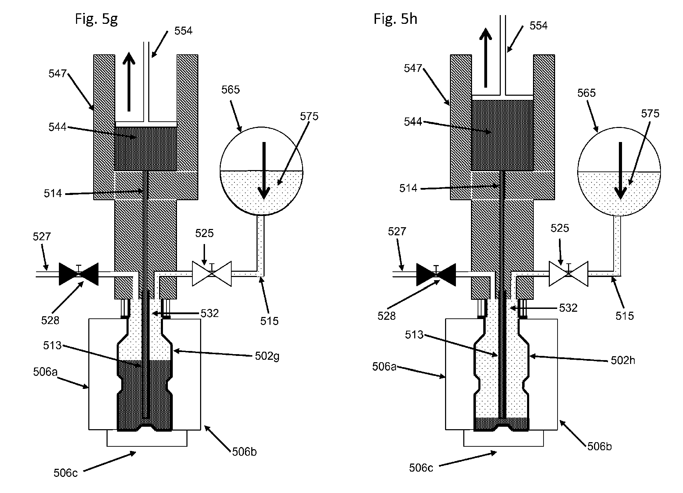

Die Figuren 5a-k zeigen Momentaufnahmen eines Verfahrens zum Formfüllen eines Behälters, bei welchem die zum Ausformen verwendete Flüssigkeit mit der ersten (heißeren) Temperatur größtenteils aus dem ausgeformten Behälter zurückgezogen wird. Zu diesem Zweck verfügt die Formfüllmaschine über eine Druckkammer 547, die über Verschieben eines Hubkolbens 554 mit Druck beaufschlagt werden kann. Der Hubkolben 554 kann beispielsweise mittels eines Servomotors aus der Druckkammer heraus gezogen und wieder in diese hinein geschoben werden, sodass eine Flüssigkeit 544 durch die Zuführleitung 514 in die Druckkammer 547 hinein gesogen und aus ihr heraus gepresst werden kann. Bei der Flüssigkeit 544 kann es sich insbesondere um das Füllprodukt handeln, welches mit einer Heizvorrichtung (nicht dargestellt) an der Druckkammer 547 oder der Zuführleitung 514 auf die erste Temperatur erhitzt wird. Gemäß dem in den Figuren 5a-k dargestellten Verfahren wird die auf die erste Temperatur erhitzte Flüssigkeit zum vollständigen Ausformen des Preforms 502 auf die endgültige Form eingesetzt. Anders als in den zuvor beschriebenen Figuren wird die dazu eingesetzte Flüssigkeit jedoch fast vollständig wieder aus dem fertig ausgeformten Behälter entnommen und zum Ausformen des nächsten Behälters in der Druckkammer 547 gespeichert. Somit fungiert die Zuführleitung 514 gleichzeitig auch als Saugleitung zum Zurückziehen der Flüssigkeit aus dem fertig ausgeformten Behälter. Da dabei ein Vermischen der Flüssigkeit 544 mit dem die zurückgezogene Flüssigkeit ersetzenden Füllprodukt 575 mit einer niedrigeren Temperatur nicht vollständig vermieden werden kann, muss die Flüssigkeit 544 nach dem Zurückziehen erneut auf die erste Temperatur erhitzt werden.

Die Zuführ- bzw. Absaugleitung 514 mündet in die linear verfahrbare und hohlgebohrte Reckstange 513. In Figur 5a ist die Reckstange 513 in der vollständig zurückgezogenen Ausgangsposition gezeigt. Die Reckstange 513 kann relativ zum Ventilkopf (unterhalb der Druckkammer 547) verfahren werden. Neben der Zuführleitung 514 bzw. Reckstange 513 werden durch den Ventilkopf eine zweite Zuführleitung 515 für das kühle Füllprodukt 575 mit der zweiten Temperatur und eine Auslassleitung 527 zum Entweichen von Gas aus dem Preform bzw. Behälter 502 in den Mündungsbereich 532 des Preforms geführt. Der untere, auf den Mündungsbereich aufgesetzte Teil des Ventilkopfes kann dabei entsprechende, hier nicht dargestellte, Fülldüsen umfassen. Die Zuführleitung 515 verbindet in der hier dargestellten exemplarischen Weiterbildung einen Vorratsbehälter 565 für das kühle Füllprodukt 575 mit dem Ventilkopf. Die Zufuhr des Füllprodukts 575 mit der zweiten Temperatur wird dabei über ein regelbares Ventil 525 geregelt. Weiterhin in die Auslassleitung 527 mit einem regelbaren Ventil 528 versehen, um bei geschlossenem Ventil Druck in dem Preform aufbauen zu können.

Figur 5a zeigt die Formfüllmaschine mit geöffneter Form 506a-c, in die jedoch bereits ein Preform 502a eingebracht wurde. Die Ventile 525 und 528 sind geschlossen und der Hubkolben 554 befindet sich in maximal zurückgezogener Position, sodass sich die gesamte Menge der Flüssigkeit 544 zum Ausformen des Behälters in der Druckkammer 547 befindet. Ebenso befindet sich die Reckstange 513 in der maximal zurückgezogenen Position.

In Figur 5b wurde die Hohlform durch Zusammenfahren der Formteile 506a-c geschlossen und der Mündungsbereich 532 des Preforms 502b an einen Schließring des Ventilkopfs gedrückt, sodass die Hohlform einerseits einen druckdicht geschlossenen Hohlraum bildet und die Mündung des Preforms 502b andererseits druckdicht mit dem Ventilkopf abschließt. Materialaustausch, ob gasförmig oder flüssig, mit dem Innenraum des Preforms findet somit ausschließlich über die dargestellten Leitungen 514, 515 und 527 statt.

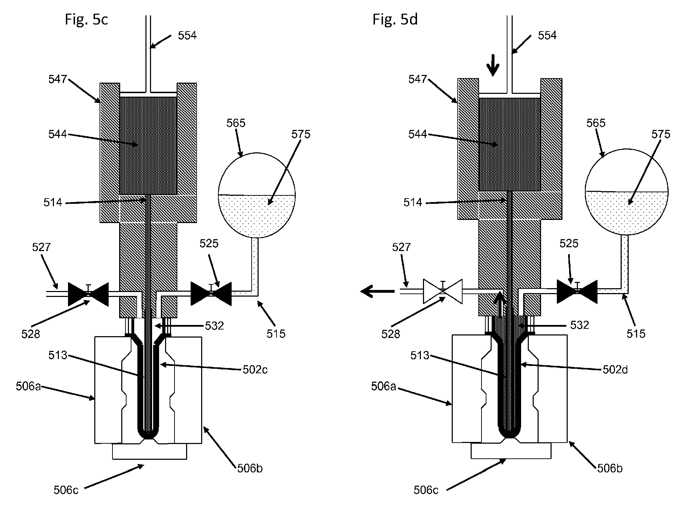

Figur 5c zeigt eine Phase, in der der Preform 502c durch Ausfahren der Reckstange 513 bis zur Bodenform 506c hin gereckt wurde, jedoch noch nicht mit der Flüssigkeit 544 gefüllt wurde. Dies geschieht in Figur 5d durch Absenken des Hubkolbens 554 in die Druckkammer 547. Das von der Flüssigkeit 544 aus dem Preform 502d verdrängte Gas kann durch Öffnen des Ventils 528 durch die Auslassleitung 527 entweichen. Es versteht sich, dass das Einfüllen der Flüssigkeit 544 auch während des Reckens des Preforms 502c beginnen kann. Sobald das gesamte Gas aus dem Preform entwichen ist, wird das Ventil 528 wieder geschlossen, um das Aufbauen eines Drucks in dem Preform zu ermöglichen. Dies geschieht durch weiteres Absenken des Hubkolbens 554 in die Druckkammer 547. Aufgrund des so erzeugten hydraulischen Drucks dehnt sich der Preform 502e, bis er wie in Figur 5f gezeigt die endgültige Form des Kunststoffbehälters erreicht hat. In dieser Phase liegt der nun vollständig ausgeformte Behälter 502f an der Innenwand der Hohlform 506a-c an und ist vollständig mit der Flüssigkeit 544 gefüllt. Da die eingefüllte Flüssigkeit 544 eine der Temperatur des Preforms entsprechende, relativ hohe Temperatur hat, kann beispielsweise Weißbruch oder Trübung von PET-Material während des Ausformens vermieden werden.

Nachdem der Behälter 502g vollständig ausgeformt ist, wird die heiße Flüssigkeit durch Herausziehen des Hubkolbens 554 aus der Druckkammer 547 durch die Reckstange 513 und die Zuführleitung 514 wieder aus dem Behälter heraus gesogen. Dabei wird gleichzeitig das Ventil 525 der Zuführleitung 515 für das kalte Füllprodukt 575 geöffnet, sodass die herausgesogene Flüssigkeit durch Füllprodukt ersetzt wird. Figur 5g zeigt einen Moment, in dem bereits ein Teil der Flüssigkeit 544 durch das Füllprodukt 575 ersetzt wurde. In der hier dargestellten vertikalen Anordnung ist es vorteilhaft, die Reckstange 513 zum Zurückziehen der Flüssigkeit in der vollständig ausgefahrenen Position zu belassen, sodass kaltes Füllprodukt von oben eingefüllt wird und heiße Flüssigkeit von unten herausgesogen wird. Aufgrund des thermischen Auftriebs kann dadurch ein rasches Vermischen eines am Boden des Behälters 502h verbleibenden Rests der heißen Flüssigkeit mit dem eingefüllten kalten Füllprodukt erreicht werden, sodass die Innenwand des Behälters gleichmäßig und zügig abgekühlt werden kann. Das Füllprodukt 575 kann zusätzlich innerhalb des Vorratsbehälters 565 unter Druck gesetzt werden.

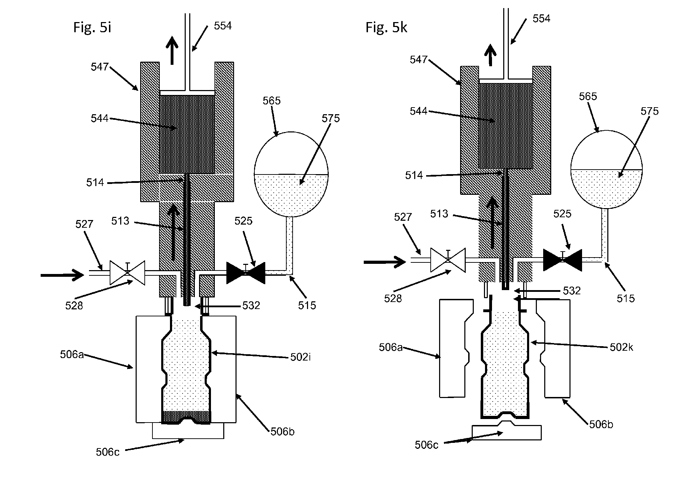

In Figur 5i wurde schließlich die weitere Zufuhr von kaltem Füllprodukt 575 durch Schließen des Ventils 525 gestoppt, wobei gleichzeitig das Ventil 528 der Auslassleitung 527 geöffnet wurde. Durch Zurückziehen der Reckstange 513 in die Ausgangsposition sinkt nun der Füllstand in dem Behälter 502i, sodass der entstehende Kopfraum durch Gas, welches durch die Auslassleitung 527 eindringt, gefüllt wird. Bei sauerstoffempfindlichen Getränken wie Bier kann dieses Gas ein Inertgas oder CO₂ sein. Anschließend wird das Ventil 528 wieder geschlossen. Zudem wird die in der Druckkammer 547 befindliche Flüssigkeit 544 wieder auf die erste Temperatur erhitzt.

In Figur 5k schließlich werden die Formteile 506a-c zur Entnahme des vollständig ausgeformten und befüllten Behälters 502k auseinander gefahren. Damit ist der Zyklus abgeschlossen und kann mit einem weiteren Preform erneut beginnen. Mit geeigneter Modifikation der Formfüllmaschine, insbesondere durch Anordnen des Ventilkopfs in einer mit der Form druckdicht schließende Kammer, kann zusätzlich ein Verschließer als Teil der Formfüllmaschine vorgesehen werden, um die befüllten Behälter unter Druck zu verschließen. Dadurch kann ein Entbinden von CO₂ aus karbonisierten Getränken verhindert werden.

Mit dem beschriebenen Verfahren lassen sich Kunststoffbehälter heiß ausformen und schnell abkühlen, sodass Weißbruch und Trübung im Material vermieden werden kann. Durch annähernd vollständiges Zurückziehen der zum Ausformen verwendeten Flüssigkeit in die beheizte Druckkammer und Ersetzen der zurückgezogenen Flüssigkeit durch das eingefüllte kalte Produkt lässt sich die Wärmeenergie der Formflüssigkeit zu großen Teilen für den nächsten Ausformvorgang bewahren. Zudem entfällt das Kühlen des befüllten Behälters und der Form, da dies durch das eingefüllte kalte Produkt geschieht. Die erstarrte Behälterwand ist somit bereits bei Entnahme des Behälters aus der Formfüllmaschine formstabil und kann problemlos transportiert und weiterbehandelt werden. Da mit kaltem Produkt befüllt wird, ist das Verfahren insbesondere für karbonisierte und wärmeempfindliche Getränke geeignet. Da zudem fast die gesamte Formflüssigkeit wieder zurückgewonnen wird, kann als Formflüssigkeit auch, aufgrund der hohen Temperatur steriles, Wasser eingesetzt werden, falls die Rezeptur des Produkts eine geringe Beimischung von Wasser erlaubt. Das zum Ausformen verwendete Wasser kann bei Bedarf in der Druckkammer ergänzt werden.

## Patentansprüche

1. Verfahren zur Herstellung eines Kunststoffbehälters sowie zu dessen Befüllung mit mindestens einem Füllprodukt in einer Form, umfassend das Einbringen eines Preforms (103, 303, 502a) in die Form (106, 506a-c), insbesondere eine Blasform, und das zumindest teilweise Herstellen des Kunststoffbehälters durch Beaufschlagen des Preforms (103, 303, 502a) mit einem Füllprodukt mit einer ersten Temperatur,
**dadurch gekennzeichnet, dass**
der Kunststoffbehälter innerhalb der Form (106, 506a-c) zumindest teilweise mit einem Füllprodukt mit einer zweiten, niedrigeren Temperatur befüllt wird.

2. Verfahren nach Anspruch 1, wobei das Füllprodukt mit der ersten Temperatur gleich dem Füllprodukt mit der zweiten Temperatur ist oder von diesem verschieden ist.

3. Verfahren nach Anspruch 1 oder 2, wobei der Kunststoffbehälter durch Beaufschlagen des Preforms (103, 303, 502a) mit dem Füllprodukt (544) mit der ersten Temperatur im Wesentlichen vollständig ausgeformt wird, und wobei das Füllprodukt (544) mit der ersten Temperatur zumindest teilweise durch das Füllprodukt (575) mit der zweiten Temperatur beim Befüllen ersetzt wird.

4. Verfahren nach Anspruch 3, wobei das Füllprodukt (544) mit der ersten Temperatur vor und / oder während des Befüllens mit dem Füllprodukt (575) mit der zweiten Temperatur aktiv aus dem Kunststoffbehälter (502g) zurückgezogen wird.

5. Verfahren nach Anspruch 4, weiterhin das erneute Erhitzen des zurückgezogenen Füllprodukts (544) auf die erste Temperatur umfassend.

6. Verfahren nach Anspruch 1 oder 2, wobei der Kunststoffbehälter nur teilweise durch Beaufschlagen des Preforms (103, 303) mit dem Füllprodukt mit der ersten Temperatur ausgeformt wird, und wobei die restliche Ausformung des Kunststoffbehälters (102, 302) durch das Befüllen mit dem Füllprodukt mit der zweiten Temperatur erfolgt.

7. Verfahren zur Herstellung eines Kunststoffbehälters sowie zu dessen Befüllung mit einem Füllprodukt in einer Blasform (106), umfassend das Einbringen eines Preforms (103, 303) in die Blasform (106) und das Beaufschlagen des Preforms (103, 303) mit einem gasförmigen Blasmedium,
**dadurch gekennzeichnet, dass**
der Kunststoffbehälter (120, 302) durch das Beaufschlagen mit dem gasförmigen Blasmedium nur teilweise ausgeformt wird, und
die restliche Ausformung des Kunststoffbehälters (102, 302) durch Befüllen mit dem Füllprodukt erfolgt.

8. Formfüllmaschine zur Herstellung eines Kunststoffbehälters sowie zu dessen Befüllung mit einem Füllprodukt in einer Form, umfassend eine Form (106; 506a-c) zum Formen beziehungsweise Streckformen eines Kunststoffbehälters aus einem Preform (103, 303; 502a), eine Zuführleitung (430; 514) zum Zuführen des Füllprodukts zu der Form (106, 506a-c) und einen Druckerzeuger (446, 456; 547, 554), um das Füllprodukt unter Druck in der Zuführleitung (430; 514) zu fördern,
**gekennzeichnet durch**
eine regelbare Heizvorrichtung (441) zum Erhitzen eines Teils des **durch** die Zuführleitung (430; 514) geführten Füllprodukts.

9. Formfüllmaschine zur Herstellung eines Kunststoffbehälters sowie zu dessen Befüllung mit einem Füllprodukt in einer Form, umfassend eine Form (106, 506a-c) zum Formen beziehungsweise Streckformen eines Kunststoffbehälters aus einem Preform (103, 303, 502a), eine erste Zuführleitung (314, 414, 514) zum Zuführen eines Mediums zu der Form (106, 506a-c) zum zumindest teilweisen Ausformen des Kunststoffbehälters und einen Druckerzeuger (444, 454; 446, 456; 547, 554), um das Medium unter Druck in der ersten Zuführleitung (314, 414, 514) zu fördern,
**gekennzeichnet durch**
eine zweite Zuführleitung (315, 415, 515) zum Zuführen des Füllprodukts zu der Form (106, 506a-c).

10. Formfüllmaschine nach Anspruch 9, wobei das Medium ein komprimiertes Gas ist und wobei der Druckerzeuger insbesondere ein Kompressor (120) ist.

11. Formfüllmaschine nach Anspruch 9, wobei das Medium das Füllprodukt und/oder ein weiteres Füllprodukt umfasst und wobei der Druckerzeuger eine Pumpe oder eine Druckkammer (444; 446; 547) mit Hubkolben (454; 456; 554) umfasst.

12. Formfüllmaschine nach Anspruch 11, wobei die Druckkammer (444; 446; 547) und / oder die erste Zuführleitung (314, 414, 514) eine Heizvorrichtung (434) zum Erhitzen des Mediums umfasst.

13. Formfüllmaschine nach einem der Ansprüche 8 bis 12, wobei das Medium und / oder das Füllprodukt über eine gemeinsame Zuführung (430), insbesondere eine hohlgebohrte Reckstange, in den auszuformenden Kunststoffbehälter geführt wird.

14. Formfüllmaschine nach einem der Ansprüche 9 bis 12, wobei das Medium und das Füllprodukt über separate Zuführungen (514, 515) in den auszuformenden Kunststoffbehälter geführt werden.

15. Formfüllmaschine nach einem der Ansprüche 8 bis 14, weiterhin mindestens ein Regelventil (324, 325; 424, 425, 426, 434, 435, 436; 525) umfassend, um die Zufuhr des Mediums und / oder des Füllprodukts zu der Form (106, 506a-c) zu regulieren.

## Geänderte Patentansprüche

### Geänderte Patentansprüche gemäss Regel 137(2) EPÜ.

1. Verfahren zur Herstellung eines Kunststoffbehälters sowie zu dessen Befüllung mit mindestens einem Füllprodukt in einer Form, umfassend das Einbringen eines Preforms (103, 303, 502a) in die Form (106, 506a-c), insbesondere eine Blasform, und das zumindest teilweise Herstellen des Kunststoffbehälters durch Beaufschlagen des Preforms (103, 303, 502a) mit einem Füllprodukt mit einer ersten Temperatur,
wobei der Kunststoffbehälter innerhalb der Form (106, 506a-c) zumindest teilweise mit einem Füllprodukt mit einer zweiten, niedrigeren Temperatur befüllt wird;
**dadurch gekennzeichnet, dass**
die erste Temperatur derart gewählt wird, dass die Temperatur des Kunststoffs des Kunststoffbehälters während des zumindest teilweisen Herstellens des Kunststoffbehälters nicht unter die Glastemperatur des Kunststoffs fällt.

2. Verfahren nach Anspruch 1, wobei das Füllprodukt mit der ersten Temperatur gleich dem Füllprodukt mit der zweiten Temperatur ist oder von diesem verschieden ist.

3. Verfahren nach Anspruch 1 oder 2, wobei der Kunststoffbehälter durch Beaufschlagen des Preforms (103, 303, 502a) mit dem Füllprodukt (544) mit der ersten Temperatur im Wesentlichen vollständig ausgeformt wird, und wobei das Füllprodukt (544) mit der ersten Temperatur zumindest teilweise durch das Füllprodukt (575) mit der zweiten Temperatur beim Befüllen ersetzt wird.

4. Verfahren nach Anspruch 3, wobei das Füllprodukt (544) mit der ersten Temperatur vor und / oder während des Befüllens mit dem Füllprodukt (575) mit der zweiten Temperatur aktiv aus dem Kunststoffbehälter (502g) zurückgezogen wird.

5. Verfahren nach Anspruch 4, weiterhin das erneute Erhitzen des zurückgezogenen Füllprodukts (544) auf die erste Temperatur umfassend.

6. Verfahren nach Anspruch 1 oder 2, wobei der Kunststoffbehälter nur teilweise durch Beaufschlagen des Preforms (103, 303) mit dem Füllprodukt mit der ersten Temperatur ausgeformt wird, und wobei die restliche Ausformung des Kunststoffbehälters (102, 302) durch das Befüllen mit dem Füllprodukt mit der zweiten Temperatur erfolgt.

7. Verfahren zur Herstellung eines Kunststoffbehälters sowie zu dessen Befüllung mit einem Füllprodukt in einer Blasform (106), umfassend das Einbringen eines Preforms (103, 303) in die Blasform (106) und das Beaufschlagen des Preforms (103, 303) mit einem gasförmigen Blasmedium,
**dadurch gekennzeichnet, dass**
der Kunststoffbehälter (120, 302) durch das Beaufschlagen mit dem gasförmigen Blasmedium nur teilweise ausgeformt wird, und
die restliche Ausformung des Kunststoffbehälters (102, 302) durch Befüllen mit dem Füllprodukt erfolgt.

8. Formfüllmaschine zur Herstellung eines Kunststoffbehälters sowie zu dessen Befüllung mit einem Füllprodukt in einer Form, umfassend eine Form (106; 506a-c) zum Formen beziehungsweise Streckformen eines Kunststoffbehälters aus einem Preform (103, 303; 502a), eine Zuführleitung (430; 514) zum Zuführen des Füllprodukts zu der Form (106, 506a-c) und einen Druckerzeuger (446, 456; 547, 554), um das Füllprodukt unter Druck in der Zuführleitung (430; 514) zu fördern,
**gekennzeichnet durch**
eine regelbare Heizvorrichtung (441) zum Erhitzen eines Teils des **durch** die Zuführleitung (430; 514) geführten Füllprodukts.

9. Formfüllmaschine zur Herstellung eines Kunststoffbehälters sowie zu dessen Befüllung mit einem Füllprodukt in einer Form, umfassend eine Form (106, 506a-c) zum Formen beziehungsweise Streckformen eines Kunststoffbehälters aus einem Preform (103, 303, 502a), eine erste Zuführleitung (314, 414, 514) zum Zuführen eines Mediums zu der Form (106, 506a-c) zum zumindest teilweisen Ausformen des Kunststoffbehälters, einen Druckerzeuger (444, 454; 446, 456; 547, 554), um das Medium unter Druck in der ersten Zuführleitung (314, 414, 514) zu fördern, undeine zweite Zuführleitung (315, 415, 515) zum Zuführen des Füllprodukts zu der Form (106, 506a-c);
**dadurch gekennzeichnet, dass**
das Medium ein komprimiertes Gas ist und der Druckerzeuger insbesondere ein Kompressor (120) ist; oder
das Medium das Füllprodukt und/oder ein weiteres Füllprodukt umfasst und der Druckerzeuger eine Pumpe oder eine Druckkammer (444; 446; 547) mit Hubkolben (454; 456; 554) umfasst,wobei die Druckkammer (444; 446; 547) und / oder die erste Zuführleitung (314, 414, 514) eine Heizvorrichtung (434) zum Erhitzen des Mediums umfasst.

10. Formfüllmaschine nach Anspruch 8 oder 9, wobei das Medium und / oder das Füllprodukt über eine gemeinsame Zuführung (430), insbesondere eine hohlgebohrte Reckstange, in den auszuformenden Kunststoffbehälter geführt wird.

11. Formfüllmaschine nach Anspruch 9, wobei das Medium und das Füllprodukt über separate Zuführungen (514, 515) in den auszuformenden Kunststoffbehälter geführt werden.

12. Formfüllmaschine nach einem der Ansprüche 8 bis 11, weiterhin mindestens ein Regelventil (324, 325; 424, 425, 426, 434, 435, 436; 525) umfassend, um die Zufuhr des Mediums und / oder des Füllprodukts zu der Form (106, 506a-c) zu regulieren.
